# EUROPÄISCHE PATENTSCHRIFT

(11) **EP 1 996 908 B1**
(45) Veröffentlichungstag und Bekanntmachung des Hinweises auf die Patenterteilung: **09.09.2015**
(21) Anmeldenummer: 07711868.5
(22) Anmeldetag: 09.03.2007
(51) Int. Cl.: G01G 23/37

(54) **ELEKTRONISCHE WAAGE UND VERFAHREN ZU DEREN BETRIEB**
ELECTRONIC SCALES AND METHOD FOR THE OPERATION THEREOF
BALANCE ELECTRONIQUE ET PROCEDE POUR FAIRE FONCTIONNER CETTE BALANCE

(30) Priorität: 15.03.2006 DE 102006011791; 15.03.2006 DE 202006019840 U; 15.03.2006 DE 102007007163
(43) Veröffentlichungstag der Anmeldung: 03.12.2008
(73) Patentinhaber: Sartorius Lab Instruments GmbH & Co. KG, 37075 Göttingen (DE)
(72) Erfinder: RINDERMANN, Rainer, 37083 Göttingen (DE); VON STEUBEN, Jan, 37075 Göttingen (DE); PERTSCH, Thomas, 37077 Göttingen (DE); KORDES, Apolonija, 37085 Göttingen (DE)
(74) Vertreter: Schneider, Peter Christian
(86) Internationale Anmeldenummer: PCT/EP2007/002048
(87) Internationale Veröffentlichungsnummer: WO 2007/104481

(56) Entgegenhaltungen:
- EP-A1- 1 452 849
- WO-A-02/14809
- DE-A1- 10 040 744
- DE-U1- 9 107 757

## Beschreibung

### Gebiet der Erfindung

Die Erfindung bezieht sich auf eine elektronische Waage mit einem integrierten Computer, der umfasst.:
- eine Anzeige zur Präsentation von Informationen für einen Benutzer,
- eine Eingabeeinheit zur Eingabe von Auswahldaten durch den Benutzer,
- einen Speicher zum Speichern einer Mehrzahl von aktivierbaren Profilen als Sätze von Parameterwerten zur Zuweisung an entsprechende Sätze von Parametern,
- eine Datenverarbeitungseinheit zur Ansteuerung der Anzeige, der Eingabeeinheit und des Speichers sowie zur von dem aktuell aktivierten Profil abhängigen Erfassung und Verarbeitung von Messwerten, die während einer Abarbeitung einer Wägeaufgabe durch den Benutzer erzeugt werden,
wobei bei Abarbeitung der Wägeaufgabe vom Benutzer in einer Mehrzahl aufeinander folgender Schritte jeweils die Durchführung einer von der Anzeige präsentierten Handlung angefordert wird und eine Anforderung ihrer Art nach von dem aktuell aktivierten Profil abhängt und nur dann erfolgt, wenn die im vorangehenden Schritt angeforderte Handlung als durchgeführt bestätigt ist.

Die Erfindung bezieht sich weiter auf ein Verfahren zum Betrieb einer derartigen elektronischen Waage.

### Stand der Technik

Aus der EP 1 452 849 A1 ist eine gattungsgemäße Waage bekannt. Bei modernen, elektronischen Waagen ist die Durchführung vielstufiger und zum Teil sehr komplexer Wägeaufgaben möglich. Je nach durchzuführender Wägeaufgabe müssen bei der Waage eine Vielzahl unterschiedlicher Parameter gesetzt, d.h. mit konkreten Parameterwerten belegt werden. Weitere Parametereinstellungen können in Abhängigkeit von dem Aufstellungsort der Waage, der Person des Benutzers oder ähnlichen Kriterien erforderlich sein. Um Fehler bei der Parametereinstellung zu vermeiden und die zur Einstellung erforderliche zeit zu reduzieren, ist es bekannt, Sätze von Parameterwerten als so genannte Profile in einem Speicher der Waage zu hinterlegen und je nach Anwendungsfall das zutreffende Profil zu aktivieren. Mit der Aktivierung eines Profils werden die in dem Profil gespeicherten Parameterwerte den entsprechenden Waagenparametern zugewiesen, d.h. die Waage wird entsprechend dem Profil eingestellt. Jedes Profil ist mit einer Kennung belegt, über die es identifiziert und ohne großen Zeitaufwand aufgerufen und aktiviert werden kann. Die Aufrufbarkeit eines konkreten Profils kann bei Bedarf von einer Berechtigungsprüfung des aufrufenden Benutzers abhängig gemacht werden.

Nach Aufruf eines Profils kann der Benutzer eine Wägeaufgabe durchführen, wobei er gemäß einem als Profil hinterlegten Protokoll schrittweise zur Durchführung bestimmter Handlungen aufgefordert wird. Sobald der Waage eine Bestätigung für die erfolgreiche Durchführung der angeforderten Handlung vorliegt, geht sie zum nächsten Schritt über und fordert die dort erforderliche Handlung an.

Eine gattungsgemäße Waage bedeutet aufgrund der Definition von Profilen und der daraus resultierenden Reproduzierbarkeit der Waageneinstellungen bietet, eine wesentliche Vereinfachung. Gleichwohl ergibt sich eine erhebliche Abhängigkeit von der Person des die Profile hinterlegenden Benutzers. Gleichzeitig steigt die Gefahr der Fehlbedienung mit den ständig komplexer werdenden Geräte- und Protokollentwicklungen. In der Praxis ist das Ergebnis häufig, dass die Möglichkeiten moderner Waagen zugunsten der Bedienungssicherheit nicht ausgeschöpft werden und auch hochkomplexe Geräte in der Regel nur in einem sehr grundlegenden Modus verwendet werden.

Aus der DE 91 07 751 U1 ist eine Waage bekannt, die ebenfalls die Möglichkeit einer Profilhinterlegung bietet. Bei dieser Vorrichtung wird der Benutzer jedoch bei der Abarbeitung der Wägeaufgabe nicht schrittweise durch das Protokoll geführt, sondern muss sich die entsprechenden Informationen aus dem Gedächtnis oder einem Handbuch beschaffen.

### Aufgabenstellung

Es ist die Aufgabe der vorliegenden Erfindung eine gattungsgemäße Waage und deren Bedienung derart weiter zu entwickeln, dass bei der Profilhinterlegung die Benutzerfreundlichkeit erhöht wird.

### Darstellung der Erfindung

Diese Aufgabe wird in Verbindung mit den Merkmalen des Oberbegriffs von Anspruch 1 bzw. Anspruch 9 dadurch gelöst, dass zur Erfassung eines Profils der Benutzer in einer Mehrzahl aufeinander folgender Schritte jeweils zur Auswahl einer von mehreren von der Anzeige präsentierten Optionen aufgefordert wird, wobei die Zusammenstellung der in einem Schritt präsentierten Optionen von der im vorangehenden Schritt getroffenen Auswahl abhängt.

Es ist die Grundidee der vorliegenden Erfindung, einen ausgewogenen Kompromiss zu finden zwischen den Zielen, einerseits die Entscheidungsfreiheit des Benutzers zur zuverlässigen Vermeidung von Fehlern soweit wie möglich einzuschränken, und andererseits die zur Ausnutzung aller von der Waage bereitgestellten Möglichkeiten erforderliche Entscheidungsfreiheit zu gewähren.

Die erfindungsgemäße Profileinstellung ist geleitet vom Gedanken der Redundanzvermeidung. Der Benutzer bekommt bei der Eingabe eines Profils zunächst eine Mehrzahl von Optionen präsentiert und wird zu einer Auswahl aufgefordert. Im ersten Schritt der Profilerfassung könnten sich die auswählbaren Optionen beispielsweise auf die grundsätzliche Art der gewünschten Wägeaufgabe beziehen. In der Regel erfordern unterschiedliche Wägeaufgaben nicht nur unterschiedliche Parameterwerte, sondern häufig auch unterschiedliche Parameter selbst. Dies bedeutet, dass bestimmte Parameter für einige Wägeaufgaben von Bedeutung sind, während sie für andere Wägeaufgaben völlig irrelevant sind. Eine Abfrage solch irrelevanter Parameter ist nicht erforderlich und würde im Gegenteil nur die Geduld und Sorgfalt des Benutzers unnötig belasten. In dem jeweils zu erfassenden Profil können die entsprechenden Parameterwerte undefiniert bleiben oder automatisch mit geeigneten Vorgabewerten besetzt werden. Andererseits gibt es auch Parameter, die für bestimmte Wägeaufgaben nicht nur relevant sind, sondern für die auch im Zusammenhang mit dieser Wägeaufgabe nur bestimmte, eindeutige Werte sinnvoll sind. Auch solche Parameter müssen nicht gesondert abgefragt werden, sondern die entsprechenden Parameterwerte können von dem System automatisch in dem zu erfassenden Profil hinterlegt werden.

Nach diesem Prinzip können nacheinander alle zur vollständigen Waageneinstellung erforderlichen Themenbereiche abgearbeitet werden, wobei dem Benutzer jeweils mehrere Optionen zur Auswahl angeboten werden. Jede konkrete Auswahl führt zum Setzen eines oder mehrerer Parameterwerte in dem zu erfassenden Profil, wobei gleichzeitig festgelegt wird, dass die bereits gesetzten Parameterwerte keiner Wahlmöglichkeit des Benutzers mehr unterworfen werden. Bei sinnfälliger Wahl der vom Fachmann in Ansehung des Einzelfalls zu entwerfenden Abfragehierarchie kann so die Anzahl der vom Benutzer durchzuführenden Frage-/Antwortschritte minimiert und eine Fehlprogrammierung des Profils ausgeschlossen werden. Dies ist gerade im Bereich der Profilerstellung besonders wichtig, da diese in der Regel nur sehr selten erfolgt und üblicherweise keiner späteren Überprüfung mehr unterworfen wird. Ein fehlerhaftes Profil beeinträchtigt daher nachhaltig den Betrieb der Waage.

Wie grundsätzlich aus dem Stand der Technik bekannt, ist auch bei der Erfindung vorgesehen, dass die einzelnen Schritte eines Wägeprotokolls in der Speichervorrichtung der Waage als Profil oder Teil eines Profils hinterlegt sind und der jeweils nächste Abarbeitungsschritt dem Benutzer vorzugsweise als Klartext angezeigt wird. Um sicherzustellen, dass eine solche Aufforderung zur Durchführung eines Schrittes vom Benutzer nicht einfach ignoriert wird, wird der nächste abzuarbeitende Schritt erst dann angezeigt, wenn der ihm vorangehende Schritt als abgearbeitet bestätigt ist. Eine derartige Bestätigung kann auf unterschiedliche Weise erfolgen. Beispielsweise kann der Benutzer durch manuelle Eingabe, z.B. Drücken eines Bestätigungsknopfes, die Bestätigung manuell vornehmen. Soweit möglich, ist es jedoch bevorzugt, dass die Bestätigung automatisch erfolgt, indem die Datenverarbeitungseinheit einen bestätigenden Messwert von einem Sensor erfasst, der in der Lage ist, die erfolgreiche Abarbeitung des aktuellen Schrittes zu erfassen. Beispielsweise kann der Benutzer zum Schließen eines Windschutzes aufgefordert werden, was von einem entsprechenden Mikroschalter kontrolliert und an die Datenverarbeitungseinheit weitergegeben werden kann. Ein anderes Beispiel wäre eine Aufforderung, eine bestimmte Zeitspanne zu warten, was durch einen Zeitsensor überprüft werden kann und keiner besonderen Bestätigung durch den Benutzer bedarf. Die Registrierung der Bestätigung in der Steuereinheit kann vorteilhafter Weise dem Benutzer optisch und/oder akustisch angezeigt werden.

Die Kombination dieser Merkmale führt erstmals dazu, dass sämtliche von einer modernen Waage zur Verfügung gestellten Möglichkeiten auch in der Praxis optimal nutzbar sind. So können auf einfache Weise eine Vielzahl von für den Einzelfall optimierter Profile hinterlegt werden, die sich auf die konkrete Abarbeitung von Messprotokollen auswirken können. Es ist jedoch nicht erforderlich, separat eine große Anzahl von Messprotokollen, die sich möglicherweise nur geringfügig, z.B. in der Dauer von Wartezeiten, unterscheiden, beispielsweise in einem Handbuch zu hinterlegen, was neben dem Problem der richtigen Auswahl des im konkreten Fall korrekten Messprotokolls auch die Schwierigkeit der Zuverlässigkeit der Abarbeitung birgt. Vielmehr werden die Messprotokolle nach Vorgabe der Profile von der Datenverarbeitungseinheit erzeugt und der Benutzer nur noch mit Aufforderungen zur Durchführung ganz konkreter Schritte konfrontiert, wobei diese Anforderungen sich stets auf einzelne jeweils aktuelle Schritte beziehen.

Wie erwähnt erfolgt die Präsentation der jeweils angeforderten Handlung in einer Klartextdarstellung, wobei die Darstellung über eine Anzeige erfolgt, die vorzugsweise eine optische, akustische und/oder taktile Informationspräsentationseinheit umfasst. D.h. der Begriff "Anzeige" ist hier weit zu verstehen. So kann die an den Benutzer gerichtete Aufforderung beispielsweise in einer auf einem Bildschirm ausgegebenen Textzeile bestehen und/oder von einem Sprachgenerator über einen Lautsprecher ausgegeben werden. Auch sind unterschiedliche Anzeigeformen zur Darstellung unterschiedlicher Dringlichkeitsstufen denkbar. So kann einer Textanzeige beispielsweise ein Warnton folgen, wenn die erwartete Bestätigung nicht innerhalb einer vorgegebenen Zeitspanne erfolgt.

Auch der hier verwendete Begriff des "Anforderns" einer Handlung, das schrittweise erfolgt, ist weit zu verstehen und heißt nicht notwendig, dass nachfolgende Schritte solange vor dem Benutzer geheim gehalten werden, bis sie aktuell werden. Vielmehr ist denkbar, dass der Benutzer z.B. auf einer Textanzeige eine Anzahl künftig aktuell werdender Schritte angezeigt bekommt, wobei das "Anfordern" der gerade aktuellen Handlung z.B. durch optische Hervorhebung eines Schrittes durch Sprachausgabe der entsprechenden Textzeile oder auf andere Weise erfolgt.

Obgleich bei einer erfindungsgemäßen Waage eine Fehlbedienung nahezu unmöglich ist, kann es - etwa zur Vermeidung von Sabotage - günstig sein, die Benutzung von einer Prüfung einer Berechtigungsstufe des Benutzers abhängig zu machen. Dies betrifft vor allem den besonders sensiblen Bereich der Profilerfassung. Die Prüfung der Berechtigungsstufe des Benutzers kann beispielsweise durch Eingabe eines Benutzercodes oder durch automatische Erkennung, beispielsweise durch Einlesen einer Chipkarte oder einer Transponderinformation, erfolgen. Wegen der besonderen Sensibilität des Profilerfassungsbereiches kann es günstig sein, wenn die zur Durchführung einer Profilerfassung berechtigende Berechtigungsstufe verschieden ist von einer einen Benutzer zur Abarbeitung einer Wägeaufgabe berechtigenden Berechtigungsstufe. So ist es beispielsweise möglich, die Profilerfassung nur technisch hochqualifizierten Benutzern, die sich eigens identifizieren müssen, vorzubehalten, während die Abarbeitung von Wägeaufgaben auch weniger qualifiziertem Personal überlassen werden kann, das sich je nach Vorgabe des Waagenbetreibers nicht oder mit einer geringeren Berechtigungsstufe zu identifizieren hat.

Man beachte, dass die hier benutzte Formulierung "Profile" nichts über die konkrete Struktur eines solchen Profils aussagt. So kann ein Profil beispielsweise ein Parameterwertesatz sein, der für jeden vorhandenen Waagenparameter einen Wert enthält. Es ist jedoch auch eine Profilstruktur denkbar, bei der ein Profil nur werte für eine Teilmenge von Waagenparametern aufweist und bei Durchführung einer Wägeaufgabe mehrere, einander nicht überlappende Profile aktiviert werden. Beispielsweise können Aufgabenprofile, Geräteprofile und Benutzerprofile separat hinterlegt werden, wobei es denkbar ist, dass zur Erfassung bzw. Programmierung unterschiedlicher Profilarten unterschiedliche Berechtigungsstufen erforderlich sind. So könnten beispielsweise Benutzerprofile, die individuelle, ergonomische Parameter enthalten, vom Messpersonal selbst programmierbar sein, während Profile, die Werte für Ablaufparameter der Wägeaufgaben oder Werte für Parameter mit Bezug auf Peripheriegeräte etc. enthalten, Personen mit höherer Berechtigungsstufe vorbehalten sind.

Weitere Merkmale und Vorteile der Erfindung ergeben sich aus der nachfolgenden speziellen Beschreibung und der zeichnung.

Es zeigt:

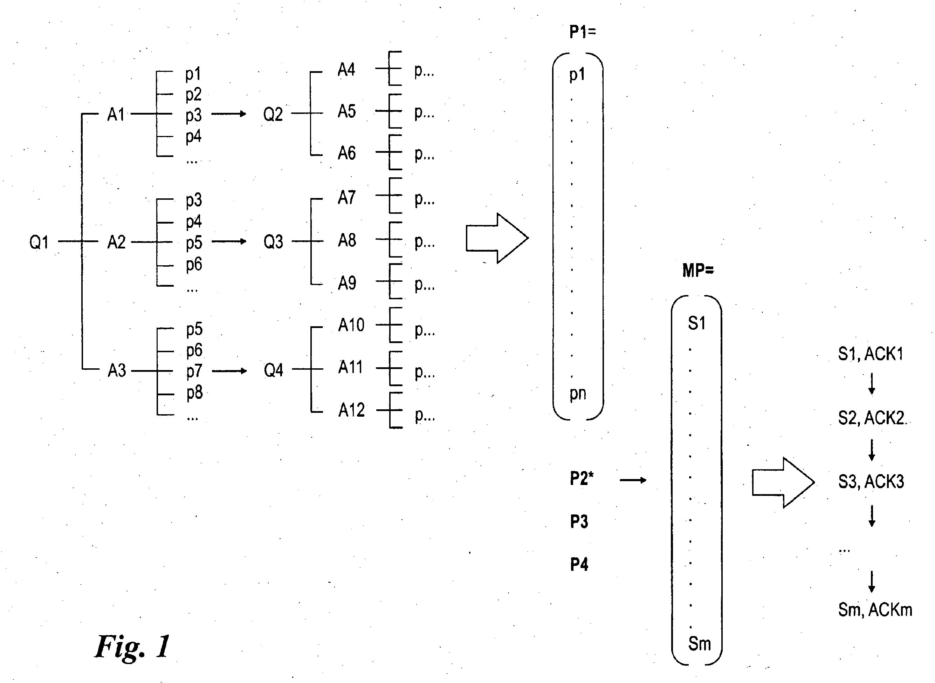

- Figur 1:: ein vereinfachtes Schema der erfindungsgemäßen Struktur.

Figur 1 zeigt stark vereinfacht ein Schema der Struktur, die der erfindungsgemäßen Waage und dem erfindungsgemäßen Verfahren zugrunde liegt. Mit Hilfe der Anzeige einer in Figur 1 nicht dargestellten Waage wird einem Benutzer bei der Erstellung eines Profils P zunächst eine erste Frage Q1 gestellt. Diese Frage Q1 kann sich beispielsweise auf die Wägeaufgabe beziehen, für die das Profil P erstellt werden soll. Gleichzeitig mit oder im Anschluss an die Frage Q1 werden dem Benutzer mehrere Optionen A1, A2 und A3 zur Auswahl angeboten. Das Angebot kann beispielsweise in der Darstellung der optionalen Antworten A1, A2 und A3 als Klartextzeilen einer Bildschirmanzeige erfolgen, wobei der Benutzer beispielsweise durch eine oder mehrere Eingabeelemente, z.B. virtuelle oder reale Navigationstasten, Knöpfe, Scrollbars o.ä. der Waage eine der Antworten A1, A2 und A3 auswählen kann.

Die Auswahl einer der Antworten A1, A2 oder A3 hat zwei Konsequenzen. Einerseits werden in dem Profil P ein oder mehrere Parameterwerte p gesetzt, die sich aus der ausgewählten Antwort ergeben. Dies sind zum einen solche Parameterwerte, die Parameter betreffen, welche für die beabsichtigte Wägeaufgabe relevant sind. Für solche Parameter werden sinnvoll vorgegebene oder vom Benutzer ausdrücklich genannte Parameterwerte gesetzt. Andererseits können auch solche Parameter betroffen sind,die für die beabsichtigte Wägeaufgabe keine Rolle spielen. Als entsprechende Parameterwerte werden daher irgendwelche Vorgabewerte in das Profil P eingesetzt oder der entsprechende Eintrag offen, z.B. undefiniert gelassen.

Die zweite Konsequenz aus der Auswahl einer Antwort ist die automatische Bestimmung einer nächsten Frage an den Benutzer. Diese ist abhängig von der zuvor gewählten Antwort, da auch ihre Beantwortung einen oder mehrere Parameterwerte p im Profil P setzt, es jedoch, wie zuvor erläutert, von der zuvor gewählten Antwort abhängt, welche Parameterwerte noch gesetzt werden müssen bzw. schon gesetzt sind.

Bei der dargestellten Ausführungsform werden dem Benutzer auf die Frage Q1 die Antworten A1, A2 und A3 angeboten, wobei bei Auswahl der Antwort A1 die Parameterwerte p1, p2, p3, p4 u.a. gesetzt werden, bei Auswahl der Antwort A2 die Parameterwerte p3, p4, p5, p6 u.a. gesetzt werden und bei Auswahl der Antwort A3 die Parameterwerte p5, p6, p7, p8 u.a. gesetzt werden. Das illustrierte Beispiel ist so gewählt, dass die Teilmengen derjenigen Parameterwerte, die als Folge der gewählten Antworten gesetzt werden, einander teilweise überlappen. ES sind jedoch auch eine vollständige Überlappung sowie eine vollständige Trennung denkbar. Je nach gewählter Antwort und somit je nach den im ersten Schritt gesetzten Parameterwerten müssen die nachfolgenden Fragen so gewählt werden, dass die noch nicht gesetzten Parameter möglichst schnell, d.h. im möglichst wenigen Frage/Antwort-Schritten, gesetzt werden und bereits gesetzte Parameter nicht mehr verändert werden. Entsprechend folgt bei dem illustrierten Beispiel auf die Auswahl der Antwort A1 die nächste Frage Q2, auf die Auswahl der Antwort A2 jedoch die nächste Frage Q3 und auf die Auswahl der Antwort A3 die nächste Frage Q4. Im gezeigten Beispiel werden die Fragen Q2, Q3 oder Q4 jeweils mit drei Antwortoptionen angeboten, nämlich den Antwortoptionen A4, A5 und A6 für die Frage Q2, den Antwortoptionen A7, A8 und A9 für die Frage Q3 und den Antwortoptionen A10, A11 und A12 für die Frage Q4. Die Auswahl jeder dieser Antworten A4 bis A12 führt wiederum zum Setzen jeweils eines oder mehrerer Parameter und zur Bestimmung der nachfolgenden Frage. Der Übersichtlichkeit halber wird die Illustration des Schemas hier abgebrochen, wobei der Fachmann jedoch den weiteren Verlauf leicht extrapolieren kann.

Im Ergebnis führt diese Frage/Antwort-Kaskade zu einem vollständigen Parameterwertesatz, der als ein Profil abgespeichert werden kann. Im gezeigten Beispiel ergibt sich ein Profil P1, das neben anderen Profilen P2, P3, P4 abgespeichert wird. Die weiteren Profile P2, P3 und P4 sind auf analoge Weise zu der Erstellung von P1 erstellt worden, wobei jedoch an irgendeiner Stelle eine andere Antwortoption auf eine Frage gewählt wurde, sodass ein Profil mit anderen Parameterwerten als in P1 entstanden ist.

Bei der weiteren Verwendung der Waage durch denselben oder einen anderen Benutzer wird eines der gespeicherten Profile aktiviert. In Figur 1 ist dies das Profil P2, was durch die Hinzufügung eines "*" symbolisiert ist.

Durch die Aktivierung des Profils P2 wird zur Durchführung der Wägeaufgabe automatisch ein auf den Parameterwerten des Profils P2 basierendes wägeprotokoll MP erstellt. Das Wägeprotokoll MP umfasst eine Mehrzahl von Anweisungsschritten S1 bis Sm, die zur Durchführung einer korrekten Wägung vom Benutzer sukzessive abzuarbeiten sind. Hierzu wird jeder der Schritte S1-Sm dem Benutzer auf einer Anzeige präsentiert und er wird zur Durchführung der entsprechenden Handlung aufgefordert. Nach Durchführung der angeforderten Handlung wird deren Vollendung bestätigt, was in Figur 1 mit dem Kürzel ACK symbolisiert ist. Dies bedeutet, dass zunächst der Handlungsschritt S1 angefordert, vom Benutzer durchgeführt und als ACK1 bestätigt wird. Erst dann wird der Benutzer zur Durchführung des nächsten Schrittes S2 aufgefordert, was nach Vollendung der angeforderten Handlung mit ACK2 bestätigt wird. Dieser abwechselnde Prozess von Handlungsaufforderung, Handlungsdurchführung und Handlungsbestätigung erfolgt solange, bis der letzte Schritt Sm mit ACKm bestätigt wird.

Die Bestätigungen ACK1 bis ACKm können z.B. durch Betätigung eines realen oder virtuellen Bestätigungselementes durch den Benutzer und/oder automatisch auf Basis einer Sensorerfassung der Durchführung der einzelnen Schritte erfolgen, wobei der Sensor vorzugsweise ohne Zwischenschaltung des Benutzers mit der Steuereinheit kommuniziert.

Natürlich stellt die in der speziellen Beschreibung diskutierte und in Figur 1 dargestellte Ausführungsform nur ein illustratives Ausführungsbeispiel der vorliegenden Erfindung dar. Keinesfalls ist die Erfindung auf die in der Figur dargestellten Anzahlen von Fragen, Antwortoptionen, Parameterwerten und Protokollschritten beschränkt. Auch die Struktur des Profils muss nicht die in Figur 1 gezeigte, einfache Form haben. Vielmehr ist es denkbar, dass die gesamte Waageneinstellung eine Mehrzahl von Teilprofilen umfasst, die jeweils Werte für unterschiedliche, einander nicht überlappende Gruppen von Parametern betreffen.

## Patentansprüche

1. Elektronische Waage mit einem integrierten Computer, der umfasst:
- eine Anzeige zur Präsentation von Informationen, an einen Benutzer,
- eine Eingabeeinheit zur Eingabe von Auswahldaten durch einen Benutzer,
- einen Speicher zum Speichern einer Mehrzahl von aktivierbaren Profilen als Sätze von Parameterwerten zur Zuweisung an entsprechende Sätze von Parametern,
- eine Datenverarbeitungseinheit zur Ansteuerung der Anzeige, der Eingabeeinheit und des Speichers sowie zur von dem aktuell aktivierten Profil abhängigen Erfassung und Verarbeitung von Messwerten, die während einer Abarbeitung einer Wägeaufgabe durch den Benutzer erzeugt werden,
wobei bei Abarbeitung der Wägeaufgabe vom Benutzer in einer Mehrzahl aufeinander folgender Schritte jeweils die Durchführung einer von der Anzeige präsentierten Handlung angefordert wird und eine Anforderung ihrer Art nach von dem aktuell aktivierten Profil abhängt und nur dann erfolgt, wenn die im vorangehenden Schritt angeforderte Handlung als durchgeführt bestätigt ist,
**dadurch gekennzeichnet,**
**dass** zur Erfassung eines Profils der Benutzer in einer Mehrzahl aufeinander folgender Schritte jeweils zur Auswahl einer von mehreren von der Anzeige präsentierten Optionen aufgefordert wird, wobei die Zusammenstellung der in einem Schritt präsentierten Optionen von der im vorangehenden Schritt getroffenen Auswahl abhängt.

2. Waage nach Anspruch 1,
**dadurch gekennzeichnet,**
**dass** die Anzeige eine optische, akustische und/oder taktile Informationspräsentationseinheit umfasst.

3. Waage nach Anspruch 2
**dadurch gekennzeichnet,**
**dass** die Präsentation der jeweils angeforderten Handlung in einer Klartextdarstellung erfolgt.

4. Waage nach einem der vorangehenden Ansprüche,
**dadurch gekennzeichnet,**
**dass** eine Bestätigung der Durchführung einer angeforderten Handlung mittels manueller Eingabe durch den Benutzer erfolgt.

5. Waage nach einem der vorangehenden Ansprüche,
**dadurch gekennzeichnet,**
**dass** eine Bestätigung der Durchführung einer angeforderten Handlung automatisch mittels Erfassung eines Messwertes durch die Datenverarbeitungseinheit erfolgt.

6. Waage nach einem der vorangehenden Ansprüche,
**dadurch gekennzeichnet,**
**dass** bei der Erfassung eines Profils nach einer Auswahl einer Option ein oder mehrere Parameterwerte, die sich nach vorgegebenen Regeln aus der ausgewählten Option ableiten, selbsttätig eingestellt werden.

7. Waage nach einem der vorangehenden Ansprüche,
**dadurch gekennzeichnet,**
**dass** vor einer Profilerfassung eine Prüfung einer Berechtigungsstufe des Benutzers erfolgt.

8. Waage nach Anspruch 7,
**dadurch gekennzeichnet,**
**dass** die einen Benutzer zur Durchführung einer Profilerfassung berechtigende Berechtigungsstufe verschieden ist von einer einen Benutzer zur Abarbeitung einer Wägeaufgabe berechtigenden Berechtigungsstufe.

9. Verfahren zum Betrieb einer elektronische Waage mit einem integrierten Computer, der umfasst:
- eine Anzeige zur Präsentation von Informationen an einen Benutzer,
- eine Eingabeeinheit zur Eingabe von Auswahldaten durch einen Benutzer,
- einen Speicher zum Speichern einer Mehrzahl von aktivierbaren Profilen als Sätze von Parameterwerten zur Zuweisung an entsprechende Sätze von Parametern,
- eine Datenverarbeitungseinheit zur Ansteuerung der Anzeige, der Eingabeeinheit und des Speichers sowie zur von dem aktuell aktivierten Profil abhängigen Erfassung und Verarbeitung von Messwerten, die während einer Abarbeitung einer Wägeaufgabe durch den Benutzer erzeugt werden,
wobei bei Abarbeitung der Wägeaufgabe vom Benutzer in einer Mehrzahl aufeinander folgender Schritte jeweils die Durchführung einer von der Anzeige präsentierten Handlung angefordert wird und eine Anforderung ihrer Art nach von dem aktuell aktivierten Profil abhängt und nur dann erfolgt, wenn die im vorangehenden Schritt angeforderte Handlung als durchgeführt bestätigt ist,
**dadurch gekennzeichnet,**
**dass** zur Erfassung eines Profils der Benutzer in einer Mehrzahl aufeinander folgender Schritte jeweils zur Auswahl einer von mehreren von der Anzeige präsentierten Optionen aufgefordert wird, wobei die Zusammenstellung der in einem Schritt präsentierten Optionen von der im vorangehenden Schritt getroffenen Auswahl abhängt.

10. Verfahren nach Anspruch 9,
**dadurch gekennzeichnet,**
**dass** die Präsentation der jeweils angeforderten Handlung in einer Klartextdarstellung erfolgt.

11. Verfahren nach einem der Ansprüche 9 bis 10,
**dadurch gekennzeichnet,**
**dass** eine Bestätigung der Durchführung einer angeforderten Handlung mittels manueller Eingabe durch den Benutzer erfolgt.

12. Verfahren nach einem der Ansprüche 9 bis 11,
**dadurch gekennzeichnet,**
**dass** eine Bestätigung der Durchführung einer angeforderten Handlung automatisch mittels Erfassung
eines Messwertes durch die Datenverarbeitungseinheit erfolgt.

13. Verfahren nach einem der Ansprüche 9 bis 12,
**dadurch gekennzeichnet,**
**dass** bei der Erfassung eines Profils nach einer Auswahl einer Option ein oder mehrere Parameterwerte, die sich nach vorgegebenen Regeln aus der ausgewählten Option ableiten, selbsttätig eingestellt werden.

14. Verfahren nach einem der Ansprüche 9 bis 13,
**dadurch gekennzeichnet,**
**dass** vor einer Profilerfassung eine Prüfung einer Berechtigungsstufe des Benutzers erfolgt.

15. Verfahren nach Anspruch 14,
**dadurch gekennzeichnet,**
**dass** die einen Benutzer zur Durchführung einer Profilerfassung berechtigende Berechtigungsstufe verschieden ist von einer einen Benutzer zur Abarbeitung einer Wägeaufgabe berechtigenden Berechtigungsstufe.

## Claims

1. Electronic weighing machine with an integrated computer, which comprises:
- indicating means for presentation of information to a user,
- an input unit for the input of selection data by a user,
- a memory for storage of a plurality of activatable profiles as sets of parameter values for allocation to corresponding sets of parameters,
- a data processing unit for activation of the indicating means, the input unit and the memory as well as for detection and processing, in dependence on the currently activated profile, of measurement values generated by the user during execution of a weighing task,
wherein for execution of the weighing task the performance by the user in a plurality of successive steps of a handling action presented by the indicating means is required on each occasion and a requirement according to its kind depends on the currently activated profile and takes place only when the handling action required in the preceding step is confirmed as performed,
**characterised in that**
for detection of a profile the user is required each time in a plurality of successive steps to select one of a plurality of options presented by the indicating means, wherein the composition of the options presented in a step depends on the selection made in the preceding step.

2. Weighing machine according to claim 1, **characterised in that** the indicating means comprises an optical, acoustic and/or tactile information presentation unit.

3. Weighing machine according to claim 2, **characterised in that** the presentation of the respectively acquired handling action is made in a plain text illustration.

4. Weighing machine according to any one of the preceding claims, **characterised in that** confirmation of performance of a required handling action is effected by means of manual input by the user.

5. Weighing machine according to any one of the preceding claims, **characterised in that** confirmation of performance of a required handling action is effected automatically by means of detection of a measurement value by the data processing unit.

6. Weighing machine according to any one of the preceding claims, **characterised in that** for detection of a profile after selection of an option one or more parameter values derived from the selected option in accordance with predetermined rules are automatically set.

7. Weighing machine according to any one of the preceding claims, **characterised in that** a check of an authorisation level of the user is carried out prior to profile detection.

8. Weighing machine according to claim 7, **characterised in that** the authorisation level authorising a user for performance of profile detection is different from an authorisation level authorising a user for execution of a weighing task.

9. Method of operating an electronic weighing machine with an integrated computer, which comprises:
- indicating means for presentation of information to a user,
- an input unit for the input of selection data by a user,
- a memory for storage of a plurality of activatable profiles as sets of parameter values for allocation to corresponding sets of parameters,
- a data processing unit for activation of the indicating means, the input unit and the memory as well as for detection and processing, in dependence on the currently activated profile, of measurement values generated by the user during execution of a weighing task,
wherein for execution of the weighing task the performance by the user in a plurality of successive steps of a handling action presented by the indicating means is required on each occasion and a requirement according to its kind depends on the currently activated profile and takes place only when the handling action required in the preceding step is confirmed as performed,
**characterised in that**
for detection of a profile the user is required each time in a plurality of successive steps to select one of a plurality of options presented by the indicating means, wherein the composition of the options presented in a step depends on the selection made in the preceding step.

10. Method according to claim 9, **characterised in that** the presentation of the respectively acquired handling action is made in a plain text illustration.

11. Method according to one of claims 9 and 10, **characterised in that** confirmation of performance of a required handling action is effected by means of manual input by the user.

12. Method according to any one of claims 9 to 11, **characterised in that** confirmation of performance of a required handling action is effected automatically by means of detection of a measurement value by the data processing unit.

13. Method according to any one of claims 9 to 12, **characterised in that** for detection of a profile after selection of an option one or more parameter values derived from the selected option in accordance with predetermined rules are automatically set.

14. Method according to any one of claims 9 to 13, **characterised in that** a check of an authorisation stage of the user is carried out prior to profile detection.

15. Method according to claim 14, **characterised in that** the authorisation level authorising a user for performance of profile detection is different from an authorisation level authorising a user for execution of a weighing task.

## Revendications

1. Balance électronique avec un ordinateur intégré, qui comprend :
- un affichage pour la présentation d'informations à un utilisateur,
- une unité d'entrée pour l'introduction de données à sélectionner par un utilisateur,
- une mémoire pour stocker une multiplicité de profils pouvant être activés sous forme d'ensembles de valeurs paramétriques à attribuer à des ensembles de paramètres correspondants,
- une unité de traitement de données pour commander l'affichage, l'unité d'entrée et la mémoire ainsi que pour la saisie et le traitement des valeurs de mesure en fonction du profil activé à cet instant qui sont générées pendant le déroulement d'une pesée par l'utilisateur,
où, pendant le déroulement de la pesée par l'utilisateur dans un grand nombre d'étapes se succédant l'une à l'autre, respectivement la réalisation d'une action présentée par l'affichage est requise et où la requête dépend dans sa nature du profil activé à cet instant et ne s'accomplit que si l'action requise dans l'étape précédente est confirmée comme étant réalisée,
**caractérisée en ce**
**que**, pour la saisie d'un profil, dans un grand nombre d'étapes se succédant l'une à l'autre, l'utilisateur est invité à choisir une option parmi plusieurs présentées par l'affichage, où la composition des options présentées dans une étape dépend du choix effectué dans l'étape précédente.

2. Balance selon la revendication 1,
**caractérisée en ce**
**que** l'affichage comprend une unité de présentation des informations optique, acoustique et/ou tactile.

3. Balance selon la revendication 2,
**caractérisée en ce**
**que** la présentation de l'action respectivement requise est effectuée par une représentation en texte clair.

4. Balance selon l'une des revendications précédentes,
**caractérisée en ce**
**que** la confirmation de la réalisation d'une action requise est effectuée au moyen d'une entrée manuelle par l'utilisateur.

5. Balance selon l'une des revendications précédentes,
**caractérisée en ce**
**qu'**une confirmation de la réalisation d'une action requise est effectuée automatiquement au moyen de la saisie d'une valeur de mesure par l'unité de traitement des données.

6. Balance selon l'une des revendications précédentes,
**caractérisée en ce**
**que**, lors de la saisie d'un profil après le choix d'une option, une ou plusieurs valeurs de paramètres qui sont déductibles selon des règles prédéfinies à partir de l'option choisie sont réglées de manière automatique.

7. Balance selon l'une des revendications précédentes,
**caractérisée en ce**
**que** le niveau d'autorisation de l'utilisateur est contrôlé avant une saisie de profil.

8. Balance selon la revendication 7,
**caractérisée en ce**
**que** le niveau d'autorisation autorisant un utilisateur à réaliser une saisie de profil est différent du niveau d'autorisation autorisant un utilisateur au déroulement d'une pesée.

9. Procédé de fonctionnement d'une balance électronique avec un ordinateur intégré, qui comprend .
- un affichage pour la présentation d'informations à un utilisateur,
- une unité d'entrée pour l'introduction de données à sélectionner par un utilisateur,
- une mémoire pour stocker une multiplicité de profils pouvant être activés sous forme d'ensembles de valeurs paramétriques à attribuer à des ensembles de paramètres correspondants,
- une unité de traitement de données pour commander l'affichage, l'unité d'entrée et la mémoire ainsi que pour la saisie et le traitement des valeurs de mesure en fonction du profil activé à cet instant qui sont générées pendant le déroulement d'une pesée par l'utilisateur,
où, pendant le déroulement de la pesée par l'utilisateur dans un grand nombre d'étapes se succédant l'une à l'autre, respectivement la réalisation d'une action présentée par l'affichage est requise et où la requête dépend dans sa nature du profil activé à cet instant et ne s'accomplit que si l'action requise dans l'étape précédente est confirmée comme étant réalisée,
**caractérisé en ce**
**que**, pour la saisie d'un profil, dans un grand nombre d'étapes se succédant l'une à l'autre, l'utilisateur est invité à choisir une option parmi plusieurs présentées par l'affichage, où la composition des options présentées dans une étape dépend du choix effectué dans l'étape précédente.

10. Procédé selon la revendication 9,
**caractérisé en ce**
**que** la présentation de l'action respectivement requise est effectuée par une représentation en texte clair.

11. Procédé selon l'une des revendications 9 à 10,
**caractérisé en ce**
**qu'**une confirmation de la réalisation d'une action requise est effectuée au moyen d'une entrée manuelle par l'utilisateur.

12. Procédé selon l'une des revendications 9 à 11,
**caractérisé en ce**
**qu'**une confirmation de la réalisation d'une action requise est effectuée automatiquement au moyen de la saisie d'une valeur de mesure par l'unité de traitement des données.

13. Procédé selon l'une des revendications 9 à 12,
**caractérisé en ce**
**que**, lors de la saisie d'un profil après le choix d'une option, une ou plusieurs valeurs de paramètres qui sont déductibles selon des règles prédéfinies à partir de l'option choisie sont réglées de manière automatique.

14. Procédé selon l'une des revendications 9 à 13,
**caractérisé en ce**
**qu'**un contrôle du niveau d'autorisation de l'utilisateur est effectué avant une saisie de profil.

15. Procédé selon la revendication 14,
**caractérisé en ce**
**que** le niveau d'autorisation autorisant un utilisateur à réaliser pour une saisie de profil est différent du niveau d'autorisation autorisant un utilisateur au déroulement d'une pesée.
